# EUROPÄISCHE PATENTSCHRIFT

(11) **EP 3 807 548 B1**
(45) Veröffentlichungstag und Bekanntmachung des Hinweises auf die Patenterteilung: **01.06.2022**
(21) Anmeldenummer: 19715384.4
(22) Anmeldetag: 20.03.2019
(51) Int. Cl.: F16C 19/22, F16C 33/46, F16C 33/58, F16C 33/60

(54) **ROLLENLAGER**
ROLLER BEARING
PALIER À ROULEAUX

(30) Priorität: 14.06.2018 DE 102018114240
(43) Veröffentlichungstag der Anmeldung: 21.04.2021
(73) Patentinhaber: Schaeffler Technologies AG & Co. KG, 91074 Herzogenaurach (DE)
(72) Erfinder: MUELLER, Christoph, 91054 Erlangen (DE); PFARHERR, Viktor, 91315 Höchstadt (DE); HESS, Eugen, 90768 Fürth (DE); DRASER, Georg, 90453 Nürnberg (DE); HUEBSCHMANN, Patrick, 91332 Heiligenstadt (DE)
(86) Internationale Anmeldenummer: PCT/DE2019/100258
(87) Internationale Veröffentlichungsnummer: WO 2019/238153

(56) Entgegenhaltungen:
- WO-A1-2014/057303
- DE-A1-102011 088 299
- DE-A1-102012 223 222
- DE-A1-102014 203 828
- DE-C2- 4 238 147
- DE-U- 1 846 434
- US-A- 2 057 102
- US-A1- 2007 014 502

## Beschreibung

### Gebiet der Erfindung

Die Erfindung betrifft ein zum Einbau in ein Gehäuse vorgesehenes, als Radiallager ausgebildetes Rollenlager, wobei Mittel zur axialen Abstützung des Rollenlagers innerhalb des Gehäuses vorgesehen sind.

### Hintergrund der Erfindung

Aus der DE 42 38 147 C2 ist ein Radial-Nadellager mit Abdichtung und Axialabstützung bekannt. Das Radial-Nadellager weist eine Außenhülse mit zwei nach innen weisenden Borden und eine Innenhülse mit zwei nach außen weisenden Borden auf. An der Außenumfangsfläche der Außenhülse befinden sich Rastzungen, welche zum Festkrallen in einer Aufnahmebohrung eines Umgebungsbauteils vorgesehen sind.

Die DE 10 2014 203 828 A1 beschreibt ein montagefreundliches Wälzlager, welches eine Hülse mit einem radial nach innen gerichteten Bord aufweist. An der dem Bord gegenüberliegenden Stirnseite des Wälzlagers ist an die Hülse ein radial nach außen weisender Kragen angeformt. An dem Kragen ist ein Deckel befestigt, welcher im Wesentlichen radial nach innen gerichtet ist und somit dem Bord gegenüberliegt.

Die DE 101 23 965 B4 offenbart ein Nadellager, dessen Außenring, das heißt Hülse, ebenso wie im Fall der DE 10 2014 203 828 A1, nur an einer Seite mit einem radial nach innen gerichteten Bord versehen ist. Bei dem Nadellager nach der DE 101 23 965 B4 ist an der dem Bord gegenüberliegenden Seite wenigstens an einer Umfangsstelle ein radial nach außen gebogener Lappen angeordnet, an dem ein Vorsprung einer kreisringartigen Anlaufscheibe, das heißt Ringscheibe, anliegt. Der Lappen und der Vorsprung sind durch eine aufgesteckte Kappe miteinander verbunden.

DE 10 2012 223 222 A1 zeigt eine Hülse mit integrierten Seitendeckeln (also ohne Rastverbindung). US 2 057 102 A zeigt ein gattungsgemäßes Rollenlager mit Hülse.

### Aufgabe der Erfindung

Der Erfindung liegt die Aufgabe zugrunde, ein gegenüber dem Stand der Technik weiterentwickeltes, fertigungsfreundlich gestaltetes Rollenlager anzugeben, welches Mittel zur axialen Sicherung des Lagers in einem Gehäuse aufweist.

### Beschreibung der Erfindung

Diese Aufgabe wird erfindungsgemäß gelöst durch ein Rollenlager mit den Merkmalen des Anspruchs 1. Ebenso wird die Aufgabe gelöst durch ein Herstellungsverfahren gemäß Anspruch 3. Im Folgenden im Zusammenhang mit dem Verfahren erläuterte Ausgestaltungen und Vorteile der Erfindung gelten sinngemäß auch für die Vorrichtung, das heißt das Rollenlager, und umgekehrt.

Das Rollenlager umfasst eine Hülse, durch welche eine Wälzkörperlaufbahn gebildet ist, sowie einen an der Hülse mittels einer Rastverbindung gehaltenen Deckel, wobei der Deckel nach außen gerichtete Sicherungsmittel aufweist, welche die Hülse in Radialrichtung überragen und zur axialen Fixierung des Deckels und damit auch der Hülse in einem die Hülse umgebenden Gehäuse vorgesehen sind.

Die Erfindung geht von der Überlegung aus, dass Rollenlager in der Regel mit einer Übermaßpassung in ein Gehäuse eingepresst werden. Wäre hierbei eine zu niedrige Überdeckung gegeben, bestünde das Risiko, dass die Hülse des Lagers während des Betriebs aus der Gehäusebohrung wandert. Bei einer zu großen Überdeckung wäre dagegen je nach Umgebungskonstruktion das Risiko einer Beschädigung des Gehäuses gegeben. Um diesen Risiken entgegenzuwirken, könnte an der Hülse eine umlaufende Rändelung zur Reibungserhöhung angebracht werden.

Die Erfindung wählt einen hiervon grundlegend abweichenden Ansatz, indem eine axiale Sicherung eines Rollenlagers nicht an der Hülse, sondern an einem mit der Hülse mittels Rastverbindung verbundenen Deckel vorgesehen ist. In bevorzugter Ausgestaltung sind die Sicherungsmittel, welche der axialen Sicherung des Rollenlagers in einem Gehäuse dienen, am Übergang zwischen einem ringscheibenförmigen Abschnitt und einem Bord, das heißt zylindrischen Abschnitt, des Deckels an den Deckel angeformt.

Die Befestigung eines Deckels in Form einer Ringscheibe an einer Hülse eines Wälzlagers mittels einer Rastverbindung ist in der nachveröffentlichten Patentanmeldung DE 10 2017 119 477.0 beschrieben. Dementsprechend sind auch im vorliegenden Fall an einer Seite der Hülse Rastmittel, insbesondere in Form einer Rastnut, vorgesehen, an denen korrespondierende Rastmittel der Ringscheibe fixiert sind. Die Rastmittel der Ringscheibe, das heißt des Deckels, sind vorzugsweise als um den Umfang verteilte Rastvorsprünge ausgebildet.

Erfindungsgemäß ist jedes Sicherungsmittel innerhalb einer geschlossenen Wandung des Deckels angeordnet. In alternativer, nicht erfindungsgemäßer Ausgestaltung grenzt jedes Sicherungsmittel an eine Durchbrechung innerhalb des Deckels. Die Durchbrechung befindet sich hierbei vorzugsweise ausschließlich oder überwiegend im ringscheibenförmigen Abschnitt des Deckels. Unabhängig davon, ob die Sicherungsmittel vollständig oder unvollständig von Material des Deckels umgeben sind, weist der Deckel vorzugsweise mehrere an der Hülse zu fixierende Rastmittel auf, wobei die radial nach außen gerichteten, zur Halterung in einem Gehäuse vorgesehenen Sicherungsmittel einerseits und die Rastmittel andererseits alternierend am Umfang des Deckels angeordnet sind.

Der Deckel des Rollenlagers ist in folgenden Schritten herstellbar:
- Bereitstellung eines ringscheibenförmigen Rohlings,
- Formung eines Bordes am äußeren Rand des Rohlings,
- Formung von radial nach innen gerichteten, zur Herstellung einer Rastverbindung mit einer Hülse des Rollenlagers vorgesehenen Rastmitteln am Rand des Bordes,
- Formung von radial nach außen gerichteten, zur Fixierung des Deckels in einer Gehäusebohrung geeigneten Sicherungsmitteln, welche aus dem Bord herausragen.

Die Reihenfolge der Formung der verschiedenen Konturen des aus dem ringscheibenförmigen Rohling zu fertigenden Deckels ist hierbei nicht fest vorgegeben. Ebenso wie die Rastmittel werden auch die Sicherungsmittel vorzugsweise ohne spanabhebende Bearbeitungsschritte erzeugt. Dies gilt sowohl in Varianten, in denen die Sicherungsmittel ohne Herstellung einer Durchbrechung, das heißt Durchgangsöffnung, des Rohlings erzeugt werden, als auch in Varianten, in denen die Sicherungsmittel unter Herstellung einer Öffnung im Deckel erzeugt werden.

Im letztgenannten Fall kann die Formung der Sicherungsmittel sowie der Öffnungen die Verfahrensschritte Lochen und Prägen einschließen. Beim Prägen wird hierbei Material des ringscheibenförmigen Abschnitts des Rohlings in radialer Richtung nach außen verdrängt. Ein solcher Prägevorgang ist beispielsweise unter Verwendung eines konischen Stempels durchführbar. Alternativ kann die unter Aufbrechung der Oberfläche des Rohlings erfolgende Formung der Sicherungsmittel die Verfahrensschritte Lochen und Schneidbiegen einschließen. Was das Schneidbiegen betrifft, wird beispielhaft auf die Dokumente DE 198 09 224 A1 und DE 10 2010 002 043 A1 hingewiesen.

Die Wälzkörper des Rollenlagers, welche im zylindrischen Abschnitt der Hülse abrollen, haben eine zylindrische Grundform. Insbesondere kann es sich bei den Wälzkörpern um Zylinderrollen oder Nadelrollen handeln.

Die zylindrischen Wälzkörper können in einem Käfig geführt sein. Dieser ist beispielsweise als Fensterkäfig ausgebildet. Der Fensterkäfig weist zwei Käfigringe auf, die durch Stege miteinander verbunden sind, wobei zwischen den Stegen Taschen zur Aufnahme jeweils eines Wälzkörpers gebildet sind. Einer der beiden Käfigringe ist vorzugsweise einem Bord der Hülse benachbart, insbesondere unter Bildung eines Ringspaltes radial innerhalb des an die Hülse angeformten Bordes angeordnet. Der zweite Käfigring ist dagegen nahe an dem Deckel angeordnet, welcher per Rastverbindung mit der Hülse verbunden ist. Dieser dem Deckel benachbarte Käfigring ist vorzugsweise größer als der dem Bord der Hülse benachbarte Käfigring. Dies gilt in bevorzugter Ausgestaltung sowohl für einen Vergleich zwischen den Außendurchmessern der beiden Käfigringe als auch für einen Vergleich zwischen den Innendurchmessern der beiden Käfigringe. Der dem Bord benachbarte Käfigring hat vorzugsweise einen Außendurchmesser, welcher größer als der Innendurchmesser des Käfigrings, welcher dem Deckel benachbart ist, jedoch kleiner als der Außendurchmesser des letztgenannten Käfigrings ist.

Das Rollenlager eignet sich zur Herstellung einer Lageranordnung, welche zusätzlich zum Rollenlager ein Gehäuse aufweist. Hierbei ist die Hülse samt Deckel in eine Bohrung des Gehäuses eingesetzt. Gemäß einer ersten Befestigungsvariante greifen die Sicherungsmittel des Deckels in eine Nut im Gehäuse ein. Alternativ sind die Sicherungsmittel des Deckels als selbstschneidende, in eine glatte Bohrung des Gehäuses einzusetzende Sicherungselemente ausgebildet. Die Sicherungsmittel krallen sich somit in einer zunächst glatten Gehäusewandung fest. Was selbstscheidende Befestigungsmittel betrifft, wird ergänzend auf die DE 2 409 144 A hingewiesen.

Insgesamt umfasst eine Lageranordnung damit gemäß einer ersten Variante ein Rollenlager nach Anspruch 1 sowie ein Gehäuse, in welches die Hülse sowie der Deckel eingesetzt sind, wobei die Sicherungsmittel des Deckels in eine Nut im Gehäuse eingreifen.

Gemäß einer zweiten Variante umfasst eine Lageranordnung ein Rollenlager nach Anspruch 1 sowie ein Gehäuse, in welches die Hülse sowie der Deckel eingesetzt sind, wobei die Sicherungsmittel des Deckels als selbstscheidende, in eine glatte Bohrung des Gehäuses einzusetzende Sicherungselemente ausgebildet sind.

### Kurze Beschreibung der Zeichnungen

Das erfindungsgemäß ausgebildete Rollenlager wird nachfolgend in einer Ausführungsform und zwei zum Verständnis wichtigen Beispielen unter Bezugnahme auf die beigefügten Zeichnungen näher erläutert. Dabei zeigen:
- Figur 1: eine Ausführungsform eines Deckels eines Rollenlagers in stirnseitiger Ansicht,
- Figur 2: den Deckel nach Figur 1 in einer Schnittdarstellung,
- Figur 3: ein Detail aus Figur 2,
- Figur 4: eine weitere stirnseitige Ansicht des Deckels nach Figur 1,
- Figur 5: eine weitere Schnittdarstellung des Deckels nach Figur 1,
- Figur 6: ein Detail aus Figur 5,
- Figur 7: den Deckel nach Figur 1 in perspektivischer Ansicht,
- Figur 8: ein erstes Beispiel eines Deckels eines Rollenlager in stirnseitiger Ansicht,
- Figur 9: den Deckel nach Figur 8 in einer Schnittdarstellung,
- Figur 10: ein Detail aus Figur 9,
- Figur 11: den Deckel nach Figur 8 in einer Ansicht analog Figur 4,
- Figur 12: ein Detail aus Figur 11,
- Figur 13: eine Detailansicht des Deckels nach Figur 8
- Figur 14: eine weitere Detailansicht des Deckels nach Figur 8,
- Figur 15: den Deckel nach Figur 8 in perspektivischer Ansicht,
- Figur 16: ein zweites Beispiel eines Deckels für ein Rollenlager in stirnseitiger Ansicht,
- Figur 17: den Deckel nach Figur 16 in einer Schnittdarstellung,
- Figur 18: ein Detail aus Figur 17,
- Figur 19: den Deckel nach Figur 16 in einer Ansicht analog Figur 4,
- Figur 20: eine Detailansicht des Deckels nach Figur 16,
- Figur 21: eine weitere Detailansicht des Deckels nach Figur 16,
- Figur 22: den Deckel nach Figur 16 in perspektivischer Ansicht,
- Figur 23: ausschnittsweise in einer Schnittdarstellung eine Lageranordnung, welche ein Rollenlager mit einer Hülse und einem daran mittels Rastverbindung gehaltenen Deckel nach Figur 1 umfasst.
- Figur 24: ausschnittsweise in einer Schnittdarstellung eine weitere Lageranordnung, welche ein Rollenlager mit einer Hülse und einem daran mittels Rastverbindung gehaltenen Deckel nach Figur 1 umfasst.

### Ausführliche Beschreibung der Zeichnungen

Die folgenden Erläuterungen beziehen sich, soweit nicht anders angegeben, auf das Ausführungsbeispiel und sämtliche Beispiele. Einander entsprechende oder prinzipiell gleichwirkende Teile oder Konturen sind in allen Figuren mit den gleichen Bezugszeichen gekennzeichnet.

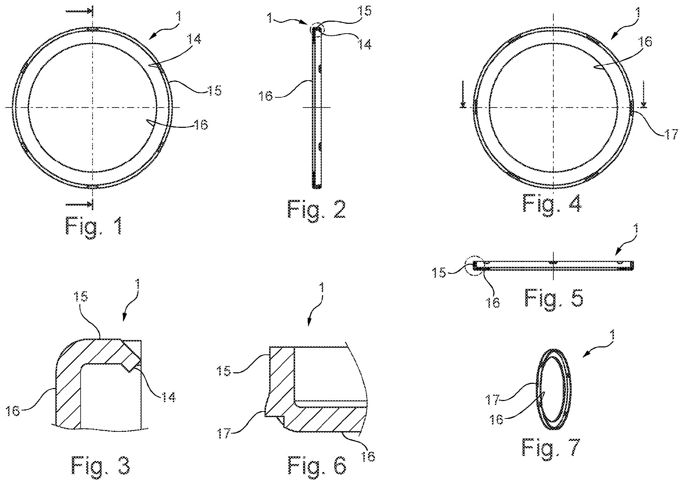

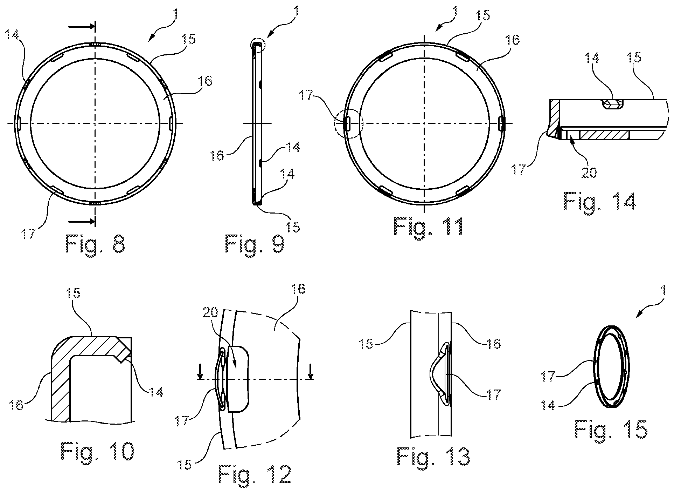

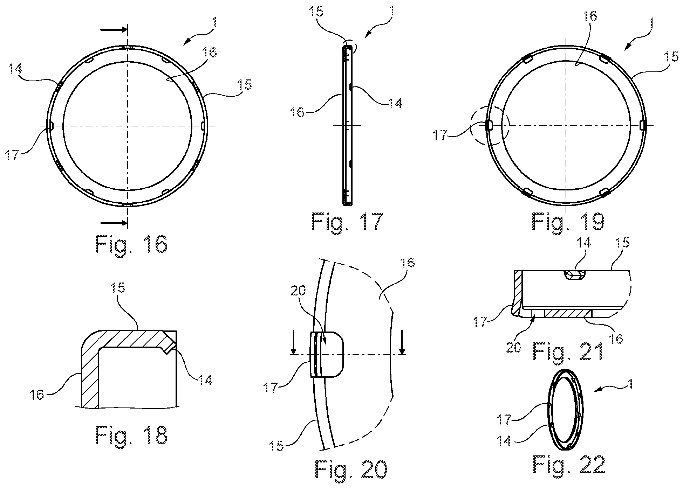

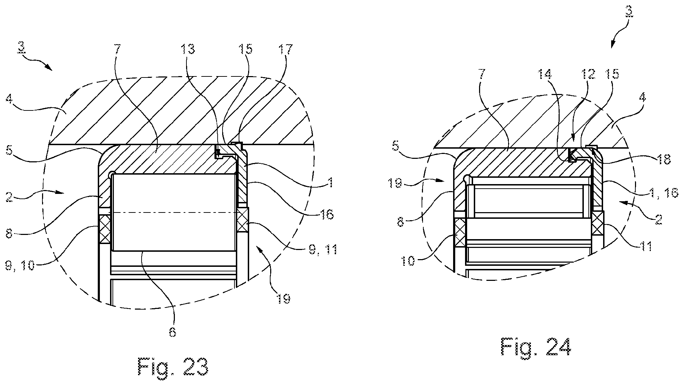

Ein als Blechteil gefertigter Deckel 1, welcher in den Figuren 1 bis 7 dargestellt ist, kommt in einem in den Figuren 23 und 24 dargestellten Rollenlager 2 zum Einsatz. Ebenso ist der in den Figuren 8 bis 15 dargestellte Deckel 1 sowie der in den Figuren 16 bis 22 dargestellte Deckel 1 zur Verwendung im Rollenlager 2 geeignet. Das Rollenlager 2 ist Teil einer Lageranordnung, welche insgesamt mit dem Bezugszeichen 3 gekennzeichnet ist. Die Lageranordnung 3 umfasst zusätzlich zum Rollenlager 2 ein Gehäuse 4, in welchem das Rollenlager 2 aufgenommen ist, wobei das Rollenlager 2 gegenüber dem Gehäuse 4 in Axialrichtung gesichert ist.

Das Rollenlager 2 ist als Radiallager ausgebildet und umfasst eine Hülse 5, in der Rollen 6, nämlich Zylinderrollen, als Wälzkörper abrollen. Die Wälzkörper 6 rollen hierbei in einem zylindrischen Abschnitt 7 der Hülse 5 ab. An genau einer Stirnseite der Hülse 5 schließt sich an den zylindrischen Abschnitt 7 ein radial nach innen gerichteter Bord 8 an, an dem die Wälzkörper 6 mit ihren Stirnseiten anlaufen können. Die Wälzkörper 6 sind in einem Käfig 9 geführt, welcher aus Kunststoff gefertigt und als Fensterkäfig gestaltet ist. Der Käfig 9 weist zwei Käfigringe 10, 11 auf, welche durch Stege unter Bildung von Taschen für die Aufnahme jeweils eines Wälzkörpers 6 miteinander verbunden sind. Der Käfigring 10, welcher radial unmittelbar innerhalb des Bordes 8 angeordnet ist und als bordnaher Käfigring bezeichnet wird, hat einen kleineren Durchmesser als der zweite, auf der gegenüberliegenden Stirnseite des Rollenlagers 2 angeordnete Käfigring 11. Radial außerhalb des letztgenannten Käfigrings 11 befindet sich die Scheibe 1. Diese ist mittels einer Rastverbindung 12 mit dem zylindrischen Abschnitt 7 der Hülse 5 verbunden. Der zylindrische Abschnitt 7 weist zu diesem Zweck eine umlaufende Nut 13 auf. In die Nut 13 greifen Rastmittel 14 ein, welche durch den Deckel 1 gebildet sind und sich an einem zylindrischen Abschnitt 15 des Deckels 1 befinden. An den zylindrischen Abschnitt 15, welcher auch als Bord bezeichnet wird, schließt sich ein radial nach innen gerichteter ringscheibenförmiger Scheibenabschnitt 16, das heißt Scheibenabschnitt, des Deckels 1 an. Der Deckel 1 beschreibt damit insgesamt eine flache, nicht geschlossene Topfform.

Der Scheibenabschnitt 16 liegt in einer Ebene, welche normal zur Rotationsachse des Rollenlagers 2, das heißt zur Mittelachse der Lageranordnung 3, ausgerichtet ist. Im Übergangsbereich zwischen dem Scheibenabschnitt 16 und dem zylindrischen Abschnitt 15 befinden sich, am Umfang des Deckels 1 verteilt, mehrere Sicherungsmittel 17, welche auch als Sicherungsnasen bezeichnet werden. Die Sicherungsmittel 17 greifen in eine Nut 18 im Gehäuse 4 ein. Alternativ könnten sich die Sicherungsmittel selbstschneidend im Gehäuse 4 festkrallen. In jedem Fall überragen die Sicherungsmittel 17 die Hülse 5 in Radialrichtung. Mit den Sicherungsmitteln 17 wird nicht nur der Deckel 1, sondern das gesamte Rollenlager 2 innerhalb des Gehäuses 4 in Axialrichtung gesichert. Eine Welle, auf der die Wälzkörper 6 abrollen, ist in den Figuren nicht dargestellt. Statt direkt auf einer Welle könnten die Wälzkörper 6 auch auf einem Lagerinnenring abrollen, welcher mit einem weiteren rotierenden Bauteil verbunden ist. Die Baueinheit aus Hülse 5, hieran mittels Rastverbindung 12 befestigtem Deckel 1, sowie im Käfig 9 geführten Rollen 6 wird als Rollenhülse 19 bezeichnet.

Der Deckel 1 weist eine übereinstimmende Anzahl an Rastmitteln 14 und Sicherungselementen 17 auf, wobei die Rastmittel 14 und die Sicherungsmittel 17 alternierend am Umfang des Deckels 1 angeordnet sind. In den Ausführungsbeispielen weist der Deckel jeweils sechs Rastmittel 14, welche der Rastverbindung 12 zuzurechnen sind, sowie Sicherungsmittel 17 auf. Bei den Rastmitteln 14 handelt es sich ebenso wie bei den Sicherungsmitteln 17 um spanlos geformte Konturen des Deckels 1. Der Deckel 1 ist dünnwandiger die Hülse 5.

Im Ausführungsbeispiel nach den Figuren 1 bis 7 sind die Sicherungsmittel 17, das heißt Sicherungsnasen, als bodenseitige Aufwürfe durch Prägen hergestellt. Beim Prägevorgang wird Material hauptsächlich des Scheibenabschnitts 16 radial nach außen verdrängt, sodass die damit entstehenden Sicherungsnasen 17, welche sich im Übergangsbereich zwischen dem Scheibenabschnitt 16 und dem zylindrischen Abschnitt 15 befinden, den übrigen zylindrischen Abschnitt 15 radial nach außen überragen. In dem in den Figuren 1 bis 7 veranschaulichten Fall sind die Sicherungsmittel 17 vollständig von Material des Deckel 1 umgeben. Dies bedeutet, dass keine Öffnung im Deckel 1 an eine Sicherungsnase 15 grenzt.

Im Unterschied hierzu befindet sich im Beispiel nach den Figuren 8 bis 15 ebenso wie im Beispiel nach den Figuren 16 bis 22 eine Offnung 20 neben jedem Sicherungsmittel 17 im Scheibenabschnitt 16 des Deckels 1. Im Fall von Figur 8 bis 15 wird zur Herstellung der Sicherungsmittel 17 zunächst der Scheibenabschnitt 16, das heißt Boden, des Deckels 1 gelocht. Anschließend erfolgt ein Prägevorgang mit einem konischen Stempel, um das Sicherungsmittel 17 nach außen zu biegen. Auch im Ausführungsbeispiel nach den Figuren 16 bis 22 wird zunächst der Scheibenabschnitt 16 an Stellen, an denen die Sicherungsmittel 17 zu formen sind, gelocht. Die abschließende Formung der Sicherungsmittel 17 erfolgt in diesem Fall durch Schneidbiegen.

### Bezugszeichenliste

- 1: Deckel
- 2: Rollenlager
- 3: Lageranordnung
- 4: Gehäuse
- 5: Hülse
- 6: Wälzkörper
- 7: zylindrischer Abschnitt der Hülse
- 8: Bord
- 9: Käfig
- 10: Käfigring
- 11: Käfigring
- 12: Rastverbindung
- 13: Nut in der Hülse
- 14: Rastmittel
- 15: zylindrischer Abschnitt des Deckels, Bord
- 16: Scheibenabschnitt
- 17: Sicherungsmittel
- 18: Nut im Gehäuse
- 19: Rollenhülse
- 20: Öffnung

## Patentansprüche

1. Rollenlager (2), mit einer Hülse (5), durch welche eine Wälzkörperlaufbahn gebildet ist, sowie einem an der Hülse (5) mittels einer Rastverbindung (12) gehaltenen Deckel (1), wobei der Deckel (1) nach außen gerichtete Sicherungsmittel (17) aufweist, welche die Hülse (5) in Radialrichtung überragen und zur axialen Fixierung des Deckels (1) in einem die Hülse (5) umgebenden Gehäuse (4) vorgesehen sind, **dadurch gekennzeichnet, dass** die Sicherungsmittel (17) am Übergang zwischen einem ringscheibenförmigen Abschnitt (16) und einem Bord (15) des Deckels (1) an diesen angeformt sind und jedes Sicherungsmittel (17) innerhalb einer geschlossenen Wandung des Deckels (1) angeordnet ist.

2. Rollenlager (2) nach Anspruch 1, **dadurch gekennzeichnet, dass** der Deckel (1) zusätzlich zu den nach außen gerichteten Sicherungsmitteln (17) mehrere an der Hülse (5) gehaltene Rastmittel (14) aufweist, wobei die Sicherungsmittel (17) und die Rastmittel (14) alternierend am Umfang des Deckels (1) angeordnet sind.

3. Verfahren zur Herstellung eines Deckels (1) eines Rollenlagers (2), mit folgenden Schritten:
- Bereitstellung eines ringscheibenförmigen Rohlings,
- Formung eines Bordes (15) am äußeren Rand des Rohlings,
- Formung von radial nach innen gerichteten, zur Herstellung einer Rastverbindung (12) mit einer Hülse (5) des Rollenlagers (2) vorgesehenen Rastmitteln (14) am Rand des Bordes (15),
- Formung von radial nach außen gerichteten, zur Fixierung des Deckels (1) in einer Gehäusebohrung geeigneten Sicherungsmitteln (17), welche aus dem Bord (15) herausragen und ohne Durchbrechung der Oberflä-che des Rohlings am Übergang zwischen einem ringscheibenförmigen Abschnitt (16) des Rohlings und dem Bord (15) angeformt werden.

## Claims

1. A roller bearing (2), having a sleeve (5) by means of which a rolling element raceway is formed, and a cover (1) held on the sleeve (5) by means of a latching connection (12), wherein the cover (1) has outwardly directed securing means (17) which protrude beyond the sleeve (5) in the radial direction and are provided for the axial fixing of the cover (1) in a housing (4) surrounding the sleeve (5), **characterised in that** the securing means (17) are formed at the transition between an annular disk-shaped section (16) and a rim (15) of the cover (1) and each securing means (17) is arranged within a closed wall of the cover (1).

2. The roller bearing (2) according to claim 1, **characterised in that** the cover (1) has, in addition to the outwardly directed securing means (17), a plurality of latching means (14) held on the sleeve (5), wherein the securing means (17) and the latching means (14) are arranged alternately on the circumference of the cover (1).

3. A method for producing a cover (1) of a roller bearing (2), having the following steps:
- providing an annular disk-shaped blank,
- forming a rim (15) on the outer edge of the blank,
- shaping radially inwardly directed latching means (14) on the edge of the rim (15) which are provided for producing a latching connection (12) with a sleeve (5) of the roller bearing (2),
- shaping radially outwardly directed securing means (17) suitable for fixing the cover (1) in a housing bore, which securing means protrude from the rim (15) and are formed without breaking through the surface of the blank at the transition between an annular disk-shaped section (16) of the blank and the rim (15).

## Revendications

1. Palier à rouleaux (2) avec une douille (5) à travers laquelle est formée une voie de roulement de corps de roulement, ainsi qu'un couvercle (1) maintenu sur la douille (5) au moyen d'une liaison par encliquetage (12), le couvercle (1) présentant des moyens de fixation (17) dirigés vers l'extérieur qui dépassent la douille (5) dans la direction radiale et sont prévus pour la fixation axiale du couvercle (1) dans un boîtier (4) entourant la douille (5), **caractérisé en ce que** les moyens de fixation (17) sont formés au niveau de la jonction entre une section en forme de disque annulaire (16) et une bordure (15) du couvercle (1) sur ce dernier et chaque moyen de fixation (17) est disposé à l'intérieur d'une paroi fermée du couvercle (1).

2. Palier à rouleaux (2) selon la revendication 1, **caractérisé en ce que** le couvercle (1) présente, en plus des moyens de fixation (17) dirigés vers l'extérieur, plusieurs moyens d'encliquetage (14) maintenus sur la douille (5), les moyens de fixation (17) et les moyens d'encliquetage (14) étant disposés en alternance sur la périphérie du couvercle (1).

3. Procédé de fabrication d'un couvercle (1) d'un palier à rouleaux (2) comprenant les étapes suivantes :
- préparation d'une ébauche en forme de disque annulaire,
- formation d'une bordure (15) sur le bord extérieur de l'ébauche,
- formation, sur le bord de la bordure (15), de moyens d'encliquetage (14) dirigés radialement vers l'intérieur et prévus pour réaliser une liaison par encliquetage (12) avec une douille (5) du palier à rouleaux (2),
- formation de moyens de fixation (17) dirigés radialement vers l'extérieur et convenant à la fixation du couvercle (1) dans un alésage de boîtier, qui dépassent de la bordure (15) et sont formés sans percer la surface de l'ébauche au niveau de la jonction entre une section en forme de disque annulaire (16) de l'ébauche et la bordure (15).
